# EUROPEAN PATENT APPLICATION

(11) **EP 1 901 552 A2**
(43) Date of publication of application: **19.03.2008**
(21) Application number: 07110738.7
(22) Date of filing: 21.06.2007
(51) Int. Cl.: H04N 5/76

(54) **Video apparatus and method for processing and broadcasting video**

(30) Priority: 15.09.2006 KR 20060089814
(71) Applicant: Samsung Electronics Co., Ltd., Suwon-si, Gyeonggi-Do (KR)
(72) Inventor: KIM, Sang-hee, 106-801, Hogye e-pyeonhansesang Apartment, Gyeonggi-do (KR)
(74) Representative: Clark, Charles Robert

(57) **Abstract**

A video apparatus (100) having an exterior recording function and an interior time shift function and a broadcast processing method thereof. The video apparatus (100) includes a memory (120) which temporarily stores a broadcast of a certain time duration; an interface (170) which is connected to enable communication with a first external device (200); and a controller (160) which controls the memory (120) to output a broadcast of a certain time point from the broadcast temporarily stored to the memory (120), and transmits a recording request of a specific broadcast to the first external device (200) through the interface (170). Accordingly, resource sharing can be maximized without suffering overall performance degradation of the video system.

## Description

Apparatuses and methods consistent with the present invention relate to video processing and broadcasting the processed video. More particularly, the present invention relates to video processing utilizing an exterior recording function and an interior time shift function, and broadcasting the processed video.

With recent advancements in video and communication technology, a video system which interconnects a video apparatus over a network has been invented and is generating keen interest from the video and communication industries.

Once the video system is deployed, the video apparatuses constituting the video system are able to share video contents as well as resources such as storage media. The resource sharing in the video system is a means for lowering a manufacture cost of the video apparatuses constituting the video system. Thus, when implementing the video system, it is preferred to maximize resource sharing.

However, as for resources that are unsuitable for sharing among the video apparatuses in the video system, it is preferable that the video apparatuses constituting the video system have their own respective resources. Otherwise, the video system may suffer overall performance degradation.

The present invention aims to maximize resource sharing without overall performance degradation of a video system by providing a video apparatus having an exterior recording function and an interior time shift function, and a broadcast processing method of the video apparatus.

According to an aspect of the present invention, there is provided a video apparatus including a memory which temporarily stores a broadcast of a certain time duration; an interface which is connected to enable communication with a first external device; and a controller which controls the memory to output a broadcast of a certain time point from the broadcast temporarily stored to the memory, and transmits a recording request of a specific broadcast to the first external device through the interface.

The interface may be connected to communicate with a second external device, and the controller may transmit a transmission request for a specific broadcast which is not stored to the memory among broadcasts provided to the memory previously through a channel of a current broadcast being received by the video apparatus, to at least one of the first external device and the second external device through the interface.

The first external device may be an external device which records the requested specific broadcast for the controller, and the second external device may be an external device which temporarily stores a broadcast of a certain time duration.

The video apparatus may further include a decoder which decodes the requested specific broadcast received through the interface from one of the first external device and the second external device in response to the transmission request from the controller; and a broadcast output part which displays the requested specific broadcast decoded at the decoder.

The interface may be connected to communicate with the second external device, and the controller may transmit the broadcast temporarily stored to the memory, to the second external device through the interface.

The controller may transmit a transmission request for the recorded broadcast stored to the first external device, to the first external device through the interface, and the video apparatus may further include a decoder which decodes the recorded broadcast received through the interface from the first external device in response to the transmission request.

The memory may include a flash memory which temporarily stores the broadcast of the certain time duration.

According to an aspect of the present invention, a broadcast processing method includes outputting a broadcast of a certain time point from a temporarily stored broadcast of a certain time duration; and transmitting a recording request for a specific broadcast to a first external device.

The broadcast processing method may further include transmitting a transmission request for a non-stored broadcast to at least one of the first external device and a second external device, wherein the requested non-stored broadcast is not stored among broadcasts provided to the memory at previous times through a channel of a currently received broadcast.

The first external device may be an external device which records the requested specific broadcast, and the second external device may be an external device which temporarily stores a broadcast of a certain time duration.

The broadcast processing method may further include decoding a broadcast received from one of the first external device and the second external device in response to the transmission request for the non-stored broadcast; and displaying the decoded broadcast.

The broadcast processing method may further include transmitting the temporarily stored broadcast to the second external device.

The broadcast processing method may further include transmitting a transmission request for the recorded broadcast stored at the first external device, to the first external device; and decoding the recorded broadcast received from the first external device in response to the transmission request.

Embodiments of the present invention are now described by way of example and with reference to the attached drawing, wherein;
Figure 1 is a diagram of an exemplary video system to which the present invention is applicable;
Figure 2 is a detailed block diagram of televisions (TVs) of Figure 1;
Figure 3 is a flowchart outlining a broadcast processing method according to one exemplary embodiment of the present invention;
Figure 4 is a block diagram of a video apparatus according to another exemplary embodiment of the present invention; and
Figure 5 is a flowchart outlining a broadcast processing method according to another exemplary embodiment of the present invention.

Reference will now be made in detail to the exemplary embodiments of the present invention, examples of which are illustrated in the accompanying drawings, wherein like reference numerals refer to the like elements throughout. The exemplary embodiments are described below to explain the present invention by referring to the figures.

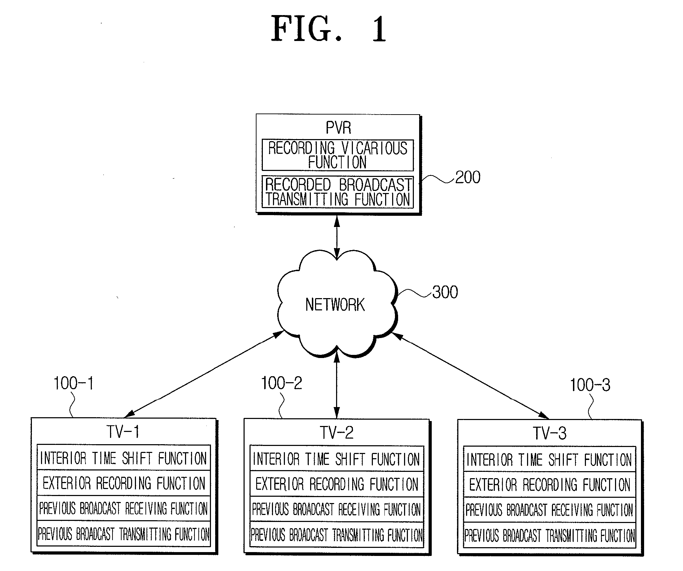

Figure 1 depicts an exemplary video system to which the present invention is applicable. As shown in Figure 1, the video system is implemented by interconnecting TVs 100-1 through 100-3 to a personal video recorder (PVR) 200 via a network 300.

The TVs 100-1 through 100-3 have an interior time shift function, an exterior recording function, a previous broadcast receiving function, and a previous broadcast transmitting function.

A time shift function is a function which displays a previous broadcast (i.e., a broadcast of the past) on a screen. The interior time shift function enables the TVs 100-1 through 100-3 to execute the time shift function by themselves.

A recording function is a function that immediately records or timer-records a specific broadcast (that is, makes a recording according to a preset timer). The exterior recording function enables the TVs 100-1 through 100-3 to request the PVR 200 to execute the recording function, wherein the PVR 200 is an external device.

The previous broadcast receiving function is to receive a broadcast from the external device which is stored to the external device using the interior time shift function. For example, the TV-1 100-1 receives a broadcast stored at the TV-2 100-2, which was stored at the TV-2 100-2 using the interior time shift function, wherein the TV-2 100-2 is the external device.

The previous broadcast transmitting function, which is a function performing operations reverse to those of the previous broadcast receiving function, is to transmit a broadcast stored for the interior time shift function to an external device. For example, the TV-1 100-1 transmits a broadcast stored to an external device such as the TV-3 100-3, wherein the TV-1 100-1 stores the broadcast using its interior time shift function.

The PVR 200 has a recording vicarious function and a recorded broadcast transmitting function. The recording vicarious function is to perform a recording operation corresponding to the recording request received from the TVs 100-1 through 100-3 having the exterior recording function. The recorded broadcast transmitting function is to transmit the recorded broadcast to an external device.

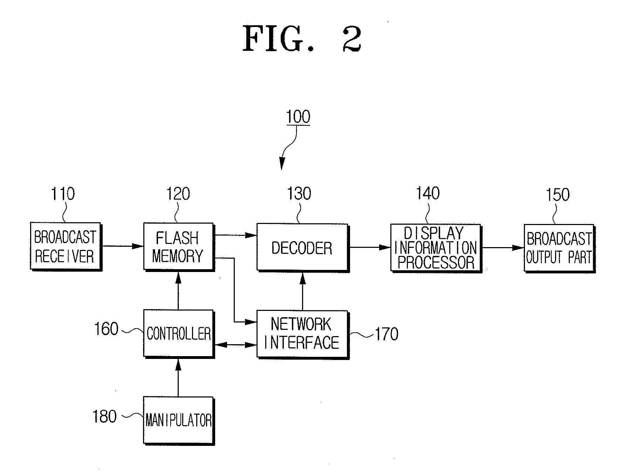

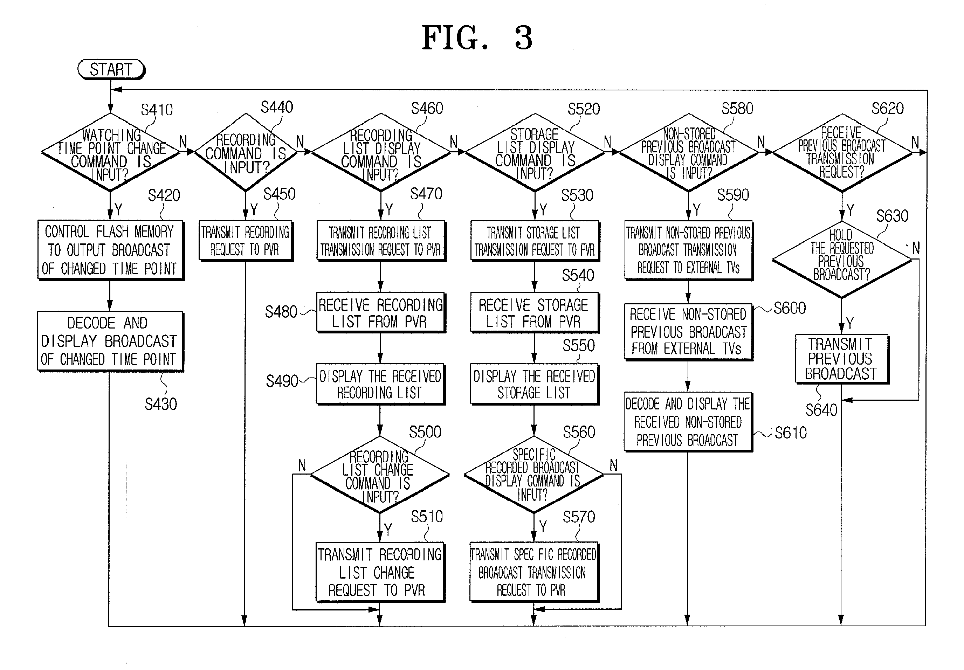

Hereinafter, configuration and operation of the TVs 100-1 through 100-3 of Figure 1 are described in detail by referring to Figures 2 and 3. Since the TVs 100-1 through 100-3 of Figure 1 can be implemented alike, the reference numeral 100 refers to the TVs 100-1 through 100-3 of Figure 2.

As shown in Figure 2, the TV 100 includes a broadcast receiver 110, a flash memory 120, a decoder 130, a display information processor 140, a broadcast output part 150, a controller 160, a network interface 170, and a manipulator 180.

The broadcast receiver 110 receives a broadcast from a broadcast station or a satellite via a cable or wireless connection. The flash memory 120 is a recording medium for temporarily storing the broadcast received by the broadcast receiver 110. The flash memory 120 can store a broadcast of a certain time duration (for e.g., a two-hour broadcast, depending on the size of the memory) according to a First-In First-Out (FIFO) scheme.

The decoder 130 decodes the broadcast output from the flash memory 120. The display information processor 140 processes display information to overlap the display information including text and/or graphic on the broadcast to be displayed. The display information may be a recording list and a storage list, which will be further explained below.

The broadcast output part 150 displays the broadcast including the overlapped display information, which is output from the display information processor 140, on a display element such as a Liquid Crystal Display (LCD) device.

The network interface 170 is connected to enable communications with the PVR 200 and the other TVs over the network 300.

The controller 160 controls the overall operation of the TV 100 according to a user's manipulation command which is input through the manipulator 180.

In specific, the controller 160 controls the TV 100 to realize an incidental function of the exterior recording function as well as the interior time shift function, the previous broadcast receiving function, and the previous broadcast transmitting function, which will be described in further detail by referring to Figure 3. Figure 3 is a flowchart outlining a broadcast processing method according to an exemplary embodiment of the present invention.

As shown in Figure 3, the controller 160 discriminates a type of a user manipulation command input through the manipulator 160 in operations S410, S440, S460, S520, and S580.

When it is a watching time point change command according to a result of the discrimination in operation S410-Y, the controller 160 controls the flash memory 120 to output the broadcast of the changed time point input by the user, to the decoder 130 in operation S420.

Next, the decoder 130 decodes the broadcast of the changed time point output from the flash memory 120, and the broadcast output part 150 displays the decoded broadcast in operation S430.

The operations S410 through S430 correspond to a process of executing the interior time shift function of the TV 100 as mentioned above.

When a recording command is input according to a result of the discrimination in operation S440-Y, the controller 160 transmits to the PVR 200 a recording request for a specific broadcast input by the user through the network interface 170 in operation S450. In response to the recording request, the PVR 200 records the requested specific broadcast.

The operations S440 and S450 correspond to a process of executing the exterior recording function of the TV 100 as mentioned above.

When a recording list display command is input according to a result of the discrimination in operation S460-Y, the controller 160 transmits a recording list transmission request to the PVR 200 through the network interface 170 in operation S470. Herein, the recording list is a list of broadcasts, of which recording is not completed yet, amongst recording-requested broadcasts of the PVR 200 in operation S450.

Next, the controller 160 receives the recording list from the PVR 200 through the network interface in operation S480 and controls the display information processor 140 to display the received recording list on the screen in operation 490.

After the operation S490, when it is confirmed that a recording list change command is input from the user in operation S500-Y, the controller 160 transmits a recording list change request to the PVR 200 through the network interface 170 in operation S510. Herein, the recording list change indicates addition, change, or deletion for items constituting the recording list, such as recording channel, recording time, recording resolution, and so forth.

The operations S460 through S510 correspond to a process of executing the incidental function of the exterior recording of the TV 100 as aforementioned.

Meanwhile, when a storage list display command is input according to the discrimination in operation S520-Y, the controller 160 transmits a storage list transmission request to the PVR 200 through the network interface 170 in operation S530. Herein, the storage list indicates a list of broadcasts stored to the PVR 200.

Next, the controller 160 receives the storage list from the PVR 200 through the network interface 170 in operation S540 and controls the display information processor 140 to display the received storage list on the screen in operation S550.

After the operation S550, when a reproduction command of a specific recorded broadcast is input according to the discrimination S560-Y, the controller 160 transmits a transmission request of the specific recorded broadcast commanded to reproduce, to the PVR 200 through the network interface 170 in operation S570.

The operations S520 through S570 correspond to a process of executing the incidental function of the exterior recording of the TV 100 as mentioned above.

When a non-stored previous broadcast display command is input according to the discrimination in operation S580-Y, the controller 160 requests a non-stored previous broadcast transmission request to the external TVs connected through the network interface 170 in operation S590. Herein, the non-stored previous broadcast indicates a broadcast which is not stored to the flash memory 120, among broadcasts which have been provided in a channel of the current broadcast received at the broadcast receiver 110.

As such, the non-stored previous broadcast transmission request includes information relating to a channel providing the currently received broadcast and information relating to an intended previous time point for watching the currently received broadcast. This is to acquire the broadcast that should be transmitted by the external TV receiving the transmission request and the intended previous time point for watching the currently received broadcast.

Next, the network interface 170 receives the non-stored previous broadcast from one of the external TVs in operation S600. The decoder 130 decodes the received non-stored previous broadcast and the broadcast output part 150 displays the decoded broadcast in operation S610.

The operations S580 through S610 correspond to a process of executing the previous broadcast receiving function of the TV 100 as mentioned earlier.

When it is confirmed that the previous broadcast transmission request is received from an external TV connected through the network interface 170 in operation S620-Y, the controller 160 determines whether it holds the transmission-requested previous broadcast in operation S630.

The controller 160 achieves the determination in operation S630 by determining whether the transmission-requested previous broadcast is stored to the flash memory 120. In more detail, the determination of operation S630 can be achieved by comparing the channel information and the previous time point information contained in the previous broadcast transmission request with channel information and time point information stored to the flash memory 120.

According to a result of the determination, when the transmission-requested previous broadcast is stored to the flash memory 120 in operation S630-Y, the controller 160 transmits the stored previous broadcast to the external TV through the network interface 170 in operation S640.

The operations S620 through S640 correspond to a process of executing the previous time point transmission function of the TV 100 as mentioned earlier.

So far, the TV having the exterior recording function and the interior time shift function and the broadcast processing method of the TV have been illustrated according to an exemplary embodiment of the present invention.

In one exemplary embodiment of the present invention, it is assumed that the received broadcast is temporarily stored to the flash memory 120 to ease the understanding. It should be appreciated that other recording media can be employed in addition to the flash memory.

While it has been illustrated that the non-stored previous broadcast transmission request is requested only to the external TVs, the non-stored previous broadcast transmission request can be requested to the PVR in addition to the external TVs.

In one exemplary embodiment of the present invention, the TV is exemplified as a video apparatus having the exterior recording function and the interior time shift function. The present invention is applicable to other video apparatuses besides the TV. Representative examples of the other video apparatuses include a Set Top Box (STB), a Personal Video Recorder (PVR), Digital Video Recorder (DVR), and so on. It is to be understood that the PVR of Figure 1 can be substituted by the other video apparatuses.

While the video system of Figure 1 includes three TVs and one PVR, there is no limitation on the number of TVs and the number of PVRs constituting the video system to which the present invention is applicable. As the type of the network 300 of Figure 1 is not limited, either a wired network or a wireless network is applicable.

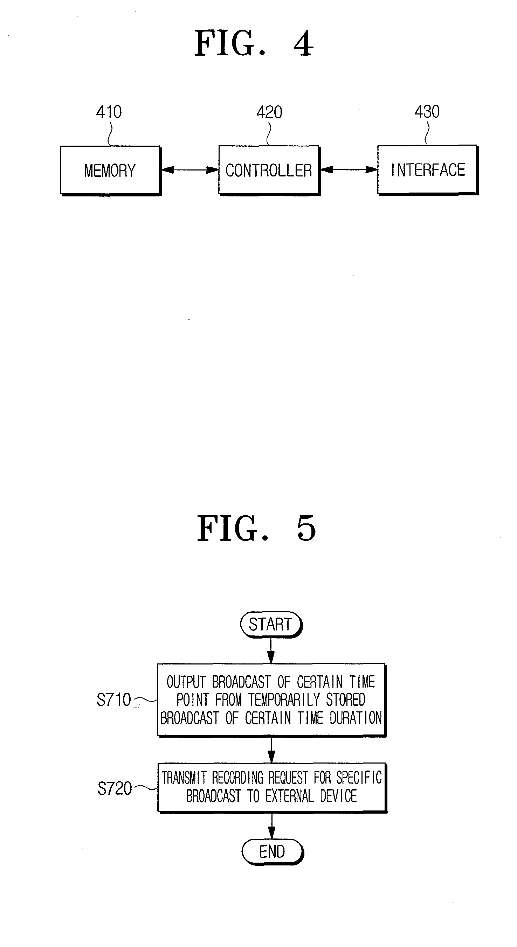

Hereafter, another exemplary embodiment of the present invention is described by referring to Figures 4 and 5.

As shown in Figure 4, a video apparatus according to another exemplary embodiment of the present invention includes a memory 410, a controller 420, and an interface 430. The memory 410 is a recording medium for temporarily storing a broadcast of a certain time duration. The interface 430 is connected to enable communications with an external device. The controller 420 controls the memory 410 to output a broadcast of a certain time point from the broadcast temporarily stored to the memory 410 and transmits a recording request for a specific broadcast to the external device through the interface 430.

According to a broadcast processing method of Figure 5, the controller 420 controls the memory 410 to output a broadcast of a certain time point from the temporarily stored broadcast of a certain time duration in operation S710. The controller 420 transmits a recording request of a specific broadcast to the external device through the interface 430 in operation S720.

Accordingly, the video apparatus having the exterior recording function and the interior time shift function can be implemented.

In light of the foregoing, the video apparatus can perform the time shift function, which is improper for execution while sharing resources at a high frequency without aid from an external device, by itself. Thus, the overall performance degradation of the video system can be prevented.

Also, the external device can vicariously execute the recording function which is proper for execution using the shared resources at a lower frequency. Since the video apparatus can be implemented without the recording function, the manufacture cost of the video apparatus is lowered.

Although a few exemplary embodiments of the present invention have been shown and described, it would be appreciated by those skilled in the art that changes may be made in these exemplary embodiments without departing from the principles of the invention, the scope of which is defined in the claims.

## Claims

1. A video apparatus comprising:
a memory means for temporarily storing a broadcast signal having a certain time duration;
an interface for communicably linking the apparatus to a first external device; and
a controller for controlling the memory means so as to output the broadcast signal temporarily stored in the memory from a certain time point of the broadcast, and the controller is arranged to transmit a recording request to a first external device via the interface to record a specific broadcast.

2. The video apparatus of claim 1, wherein the interface is further arranged to be communicably linkable to a second external device, and wherein
the controller is arranged to transmit to at least one of the first or second external devices via the interface a signal for requesting transmission of a broadcast not stored in the memory among broadcasts provided through a channel of a current broadcast being received at the video apparatus.

3. The video apparatus of claim 2, wherein the first external device is arranged to record the requested specific broadcast, and
the second external device is arranged to temporarily store another broadcast having a certain time duration.

4. The video apparatus of claim 2 or 3, further comprising:
a decoder arranged to decode the broadcast received through the interface from one of the first or second external devices in response to the transmission request from the controller; and
a broadcast output part arranged to display the broadcast decoded by the decoder.

5. The video apparatus of claim 1, wherein the interface is arranged to be communicably linkable to a second external device, and
the controller is arranged to transmit the broadcast temporarily stored in the memory to the second external device through the interface.

6. The video apparatus of claim 1, wherein the controller is arranged to transmit a transmission request to the first external device through the interface for transmission of a recorded broadcast stored in the first external device, the video apparatus further comprising:
a decoder arranged to decode the recorded broadcast received through the interface from the first external device in response to the transmission request.

7. The video apparatus of claim 1, wherein the memory means comprises a flash memory.

8. A broadcast processing method comprising:
outputting a broadcast signal from a certain time point, said broadcast signal being a temporarily stored in a memory means and having a certain time duration; and
transmitting to a first external device a request for recording a specific broadcast.

9. The broadcast processing method of claim 8, further comprising:
transmitting a request for transmission of an unstored broadcast among broadcasts provided through a channel of a currently received broadcast, to at least one of the first external device and a second external device.

10. The broadcast processing method of claim 8 or 9, wherein the first external device records the requested specific broadcast, and
the second external device temporarily stores another broadcast of a certain time duration.

11. The broadcast processing method of claim 9 or 10, further comprising:
decoding a broadcast received from one of the first external device and the second external device in response to the transmission request; and
displaying the decoded broadcast.

12. The broadcast processing method of claim 8, further comprising:
transmitting the temporarily stored broadcast to a second external device.

13. The broadcast processing method of claim 8, further comprising:
transmitting to the first external device a request for transmission a recorded broadcast stored in the first external device; and
decoding the recorded broadcast received from the first external device in response to the transmission request.
